# EUROPEAN PATENT APPLICATION

(11) **EP 4 633 025 A1**
(43) Date of publication of application: **15.10.2025**
(21) Application number: 25164202.1
(22) Date of filing: 17.03.2025
(51) Int. Cl.: H02M 3/335, H02M 1/00, H02M 1/12

(54) **STABILIZATION OF DC-TO-DC CONVERTER**

(30) Priority: 08.04.2024 US 202463631172 P
(71) Applicant: Curtis Instruments, Inc., Mount Kisco, NY 10549 (US)
(72) Inventor: ICETON, Timothy Charles, Rowlands Gill, NE39 1JF (GB)
(74) Representative: Hoefer & Partner Patentanwälte mbB

(57) **Abstract**

In one embodiment, the present disclosure is directed to a DC-to-DC converter that includes an input filter. The inductor of the input filter has an auxiliary winding wound around the core element and not coupled to the input terminal. A voltage control circuit is configured to receive a first signal from the auxiliary winding of the inductor of the input filter, the first signal being indicative of an output voltage of the input filter. The voltage control circuit adjusts the desired output voltage level based on the first signal. An output terminal provides the adjusted desired output voltage level.

## Description

### BACKGROUND

In a DC-to-DC converter, if the output impedance of the input filter exceeds the input impedance of the power conversion circuit at any frequency, oscillations may occur. These oscillations may cause a large ripple voltage at the input to the power conversion circuit. Although the converter's control circuit loop will attenuate this ripple, a portion will appear at the output of the converter, which is undesirable.

One may carefully select input filter components and tune the converter response to avoid the mismatch between impedances. But this may lead to undesirable compromises in performance of the converter. One may alternatively add additional damping components at the output of the input filter to reduce the output impedance at the resonant frequency of the filter. This may prevent the problematic oscillations, but the additional components cause an undesirable increase in the cost and size of the converter.

### BRIEF SUMMARY

To solve the above issues, the present disclosure uses the voltage at the output of the input filter as a feedback term in the converter's voltage control loop. Generating the feedback signal in practice may be problematic, however, especially for converters that have galvanic isolation between the input and output circuits. Most converter control schemes have the voltage control loop circuitry referenced to the output circuit. To include the voltage at the output of the input filter in this control loop requires the signal to be transferred across the galvanic isolation barrier.

The present disclosure is directed to using an auxiliary winding of an inductor of the input filter to transfer the required signal across the galvanic isolation barrier and allow it to be used in the voltage control loop circuitry that is referenced to the output of the converter.

The present disclosure may be directed, in one aspect, to a DC-to-DC converter comprising an input terminal configured to receive a direct current (DC) input voltage; an input filter coupled to the input terminal, the input filter comprising an inductor comprising a core element; at least one primary winding wound around the core element and coupled to the input terminal; and an auxiliary winding wound around the core element and not coupled to the input terminal; a power conversion circuit coupled to the input filter and configured to convert the DC input voltage to a desired output voltage level and comprising a voltage control circuit, the voltage control circuit configured to receive a first signal from the auxiliary winding of the inductor of the input filter, the first signal being indicative of an output voltage of the input filter; and adjust the desired output voltage level based on the first signal; and an output terminal coupled to the power conversion circuit and configured to provide the adjusted desired output voltage level.

In another aspect, a method of providing DC-to-DC power conversion includes receiving a direct current (DC) input voltage at an input terminal of a DC-to-DC converter, the DC-to-DC converter comprising the input terminal; an input filter coupled to the input terminal, the input filter comprising an inductor comprising a core element; at least one primary winding wound around the core element and coupled to the input terminal; and an auxiliary winding wound around the core element and not coupled to the input terminal; a power conversion circuit coupled to the input filter and comprising a voltage control circuit; and an output terminal coupled to the power conversion circuit; the power conversion circuit converting the DC input voltage to a desired output voltage level; the voltage control circuit receiving a first signal from the auxiliary winding of the inductor of the input filter, the first signal being indicative of an output voltage of the input filter; the voltage control circuit causing an adjustment to the desired output voltage level based on the first signal; and the output terminal providing the adjusted desired output voltage level.

### BRIEF DESCRIPTION OF THE DRAWINGS

The present disclosure will become more fully understood from the detailed description and the accompanying drawings, wherein:
Fig. 1 is a block diagram of a DC-to-DC converter according to one embodiment.
Figs. 2A-D illustrate an inductor with an auxiliary winding according to one embodiment.
Fig. 3 is a schematic of an inductor with an auxiliary winding according to another embodiment.
Fig. 4 is a graph of both the output impedance of the input filter and the input impedance of power conversion circuit.
Fig. 5A is a graph of start-up voltages for an input filter when un-damped according to a simulation.
Fig. 5B is a graph of steady state voltages for an input filter when un-damped according to a simulation.
Fig. 5C is a graph of the Fast Fourier Transform (FFT) of the input filter output voltage when un-damped according to a simulation.
Fig. 6A is a graph of start-up voltages for an input filter when damped according to a simulation.
Fig. 6B is a graph of steady state voltages for an input filter when damped according to a simulation.
Fig. 6C is a graph of the FFT of an input filter output voltage when damped according to a simulation.
Fig. 7 is flow chart of a method of stabilizing a DC-to-DC converter.

The drawings represent one or more embodiments of the present invention(s) and do not limit the scope of invention.

### DETAILED DESCRIPTION

The following description of the preferred embodiment(s) is merely exemplary in nature and is in no way intended to limit the invention or inventions. The description of illustrative embodiments is intended to be read in connection with the accompanying drawings, which are to be considered part of the entire written description. The discussion herein describes and illustrates some possible non-limiting combinations of features that may exist alone or in other combinations of features. Furthermore, as used herein, the term "or" is to be interpreted as a logical operator that results in true whenever one or more of its operands are true. Furthermore, as used herein, the phrase "based on" is to be interpreted as meaning "based at least in part on," and therefore is not limited to the interpretation "based entirely on." Furthermore, the term "each," when used in reference to each of a plurality of items, need not refer to each such item in an entire system or apparatus, but may instead simply refer to each of the specifically recited items in the system.

As used throughout, ranges are used as shorthand for describing each and every value that is within the range. Any value within the range can be selected as the terminus of the range. In addition, all references cited herein are hereby incorporated by referenced in their entireties. In the event of a conflict in a definition in the present disclosure and that of a cited reference, the present disclosure controls.

In the following description, where block diagrams or circuits are shown and described, one of skill in the art will recognize that, for the sake of clarity, not all peripheral components or circuits are shown in the figures or described in the description. For example, common components such as memory devices and power sources may not be discussed herein, as their role would be easily understood by those of ordinary skill in the art. Further, when two components are said to be "coupled" or "operably coupled," this includes components that are associated in any way such that power or signal information may be transferred (directly or indirectly) from one to another, and thus these terms do not require a direct connection between the components with no intermediaries.

It is noted that for the sake of clarity and convenience in describing similar components or features, the same or similar reference numbers may be used herein across different embodiments or figures. This is not to imply that the components or features identified by a particular reference number must be identical across different embodiments, but to suggest at a minimum that the components or features are similar in general function or identity.

Features of the present inventions may be implemented in software, hardware, firmware, or combinations thereof. The computer programs described herein are not limited to any particular embodiment, and may be implemented in an operating system, application program, foreground or background processes, driver, or any combination thereof. The computer programs may be executed on a single computer or server processor or multiple computer or server processors.

In certain embodiments, the present inventions may be embodied in the form of computer-implemented processes and apparatuses such as processor-based data processing and communication systems or computer systems for practicing those processes. The present inventions may also be embodied in the form of software or computer program code embodied in a non-transitory computer-readable storage medium, which when loaded into and executed by the data processing and communications systems or computer systems, the computer program code segments configure the processor to create specific logic circuits configured for implementing the processes.

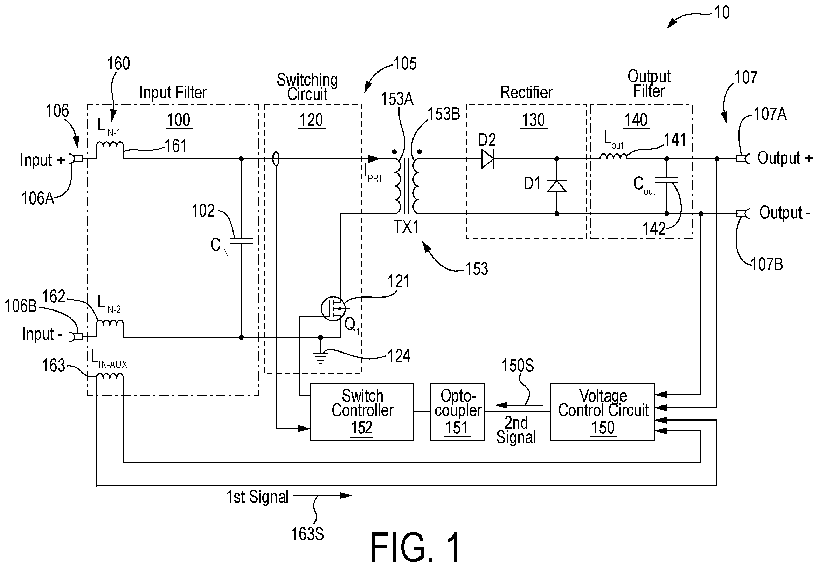

Referring now to the figures, Fig. 1 is a block diagram of a DC-to-DC converter 10 according to one embodiment. Note that the term DC-to-DC converter or converter may refer to any system capable of converting a source of DC current from one voltage level to another. The exemplified converter 10 includes an input terminal 106. In this embodiment, the input terminal 106 comprises a positive terminal 106A and a negative terminal 106B, but the invention is not so limited. The input terminal 106 is configured to receive a direct current (DC) input voltage. The converter 10 also includes an output terminal 107 coupled to a power conversion circuit 105 and configured to provide an adjusted desired output voltage level.

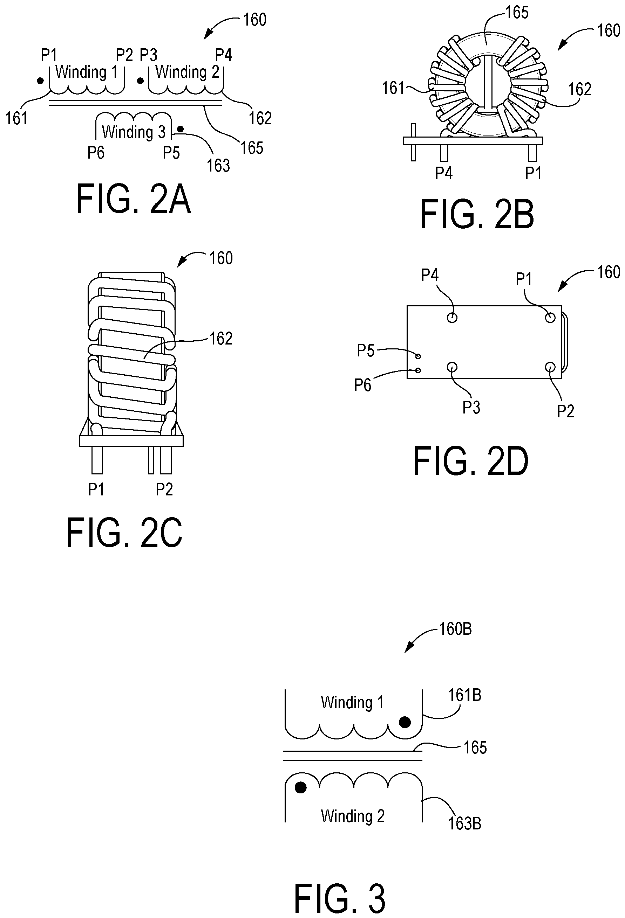

The converter 10 further includes an input filter 100 coupled to the input terminal 106, the input filter 100 comprising an inductor 106 (also identified as L_{IN}). The inductor is illustrated in greater detail in Figs. 2A-D. The inductor 106 includes a core element 165, at least one primary winding 161, 162 wound around the core element 165 and coupled to the input terminal 106, and an auxiliary winding 163 wound around the core element 165 and not coupled to the input terminal 106. The inductor 106 is discussed in greater detail below. The input filter 100 further includes an input capacitor 102 that, as discussed below, may also function as a storage element for the power conversion circuit 105.

The power conversion circuit 105 is coupled to the input filter and may be any type of circuit configured to convert a DC input voltage to a desired output voltage level. In the exemplified embodiment, the power conversion circuit 105 includes a voltage control circuit 150. The voltage control circuit 150 is configured to receive a first signal 163S from the auxiliary winding 163 of the inductor 160 of the input filter 100, the first signal being indicative of an output voltage of the input filter 100. Note that the signal may be indicative of other parameters as well, provided it is possible (not necessary) to derive the output voltage therefrom. The voltage control circuit 150 is further configured to adjust the desired output voltage level based on the first signal 163S. The voltage control circuit 150 may further be configured to receive signals from the output terminal indicative of the output voltage of the DC-to-DC converter and to adjust the output voltage level based thereon.

Regarding the use of a voltage control circuit to control the output voltage level of a DC-to-DC converter, Applicant hereby incorporates by reference in its entirety Designing for High Efficiency with the Active Clamp UCC2891 PWM Controller (Application Report) by Steve Mappus, Texas Instruments, SLUA303 - April 2004 (https://www.ti.com/lit/an/slua303/slua303.pdf) (see., e.g., sections 5 and 6 regarding control loop design). Regarding the use of a voltage control circuit to receive a signal indicative of an output voltage of the input filter and adjust the desired output voltage level based in part on the first signal, Applicant hereby incorporates by reference in their entireties the following: Input Filter Magic Webinar by Dr. Ray Ridley dated February 23, 2023 (https://ridleyengineering.com/videos-e/333-input-filter-magic.html); and Ryan T. Weichel, "ACTIVE STABILIZATION OF A DC-DC STEP-DOWN CONVERTER WITH INPUT LC FILTER VIA CURRENT-MODE CONTROL AND INPUT VOLTAGE FEEDBACK", The Pennsylvania State University, May 2010.

The exemplified power conversion circuit 105 includes a switching circuit 120 and a switch controller 152 to regulate the flow of current through the power conversion circuit 150. A switching operation of the switching circuit 120 may be based on a second signal 150S from the voltage control circuit 150. The exemplified switching circuit is a forward converter with a first switch 121 that references to ground 124. The exemplified switch controller 152 is a peak current mode pulse with modulation (PWM) controller for controlling the switching circuit 120 (e.g., by adjusting the duty cycle or frequency of the switches 121). For example, the output of the voltage control circuit may produce a desired output current, and an inner current control circuit may receive a representation of the output current as a feedback signal and produce the desired output level.

The exemplified power conversion circuit 105 further includes an energy storage element 102 coupled to the switching circuit 120 and configured to store and release energy during the operation of the power conversion circuit 105. In the exemplified embodiment, the energy storage element 102 is a capacitor, and the capacitor 102 also forms part of the input filter 100. But the invention is not so limited.

The exemplified power conversion circuit 105 further includes a transformer 153 having a primary winding 153A and a secondary winding 153B, the primary winding coupled to the switching circuit 120.

The exemplified power conversion circuit 105 further includes a rectifier 130 coupled to the secondary winding 153B of the transformer 153 and configured to rectify the output voltage of the power conversion circuit 105 to provide the desired output voltage level.

The exemplified power conversion circuit 105 further includes an optocoupler 151 coupled to the voltage control circuit and the switch controller. In an alternative embodiment, the optocoupler 151 may be replaced, for example, with an opto-emulator, such as those offered by Texas Instruments (see, e.g., ISOM8610).

Finally, the converter 10 also includes an output filter 140 coupled to the output terminal 107. The exemplified output filter includes a capacitor 142 and an inductor 141, but the output filter is not so limited. For example, the output filter may omit an inductor.

As discussed above, the auxiliary winding 163 on the input filter inductor 160 is used as a means of transferring the required signal across the galvanic isolation barrier to allow it to be used in the voltage control loop circuitry that is referenced to the output 107 of the converter 10. Any AC voltage present across the input inductor is electro-magnetically coupled to the auxiliary winding. Thus, the first signal 163S is indicative of the AC component of the output voltage of the input filter. Careful selection of the turns ratio of the auxiliary winding allows the gain of the feedback signal to be set. The polarity of the auxiliary winding may be selected to ensure negative feedback is achieved.

The power conversion circuit of a DC-to-DC converter is generally controlling the output to a fixed level. With any stable load connected to the output, the converter looks to the input like a constant power load. So if the input voltage goes up to maintain the same power, the input current goes down. This is the crux of the problem discussed herein. In a typical DC-to-DC converter, because it is controlling the output voltage to a fixed level, any increase in the input voltage results in a decrease in the input current. This is referred to as a negative incremental impedance. Looking into the input of the power conversion circuit of the DC-to-DC converter, a negative incremental impedance is seen.

The input voltage may be at a certain DC voltage but it has a small AC ripple component to it. The input impedance of the power conversion circuit of the DC-to-DC converter changes depending on the DC level of the input voltage but also depending on the frequency of any ripple on there. To match the impedance, the system can look at the AC component of the input voltage. At lower frequencies, the system can keep the negative incremental impedance, which allows maintenance of the output voltage regulation. But at the high frequencies, any instability seen at the input of the power conversion circuit of the DC-to-DC converter, by using the first signal from the inductor, it responds as if it was a positive incremental impedance. It sees an increase in voltage, it increases the current taken from the input. That damps out the oscillations.

Essentially, the AC component discussed above may be used to make the DC-to-DC converter appear as a resistive response, rather than the constant power response. By only taking the AC component, it only makes it look resistive at the frequency at which those oscillations are occurring. This enables it to provide the damping function to eliminate the oscillations.

Returning to Figs. 2A-D, these figures illustrate inductor 160 with an auxiliary winding 163 according to one embodiment. The inductor 106 includes a core element 165, at least one primary winding 161, 162 wound around the core element 165 and coupled to the input terminal 106, and an auxiliary winding 163 wound around the core element 165 and not coupled to the input terminal 106. In the preferred embodiment, the inductor is a differential mode inductor, rather than a common mode inductor. The exemplified inductor 160 has two primary windings 161, 162 coupled in series. The invention, however, is not so limited. For example, Fig. 3 shows a schematic of an inductor 160B having an auxiliary winding 163B, but where only one primary winding 161B is wrapped around the core element 165. The exemplified inductor has six pins: Pin 1 P1, Pin 2 P2, Pin3 P3, Pin4 P4, Pin 5 P5, and Pin 6 P6. Note that the auxiliary winding 163 is not shown in Figs. 2B and 2C, but the auxiliary winding would have turns distributed across the primary windings 161, 162. Also not shown is an insulation layer that covers the primary windings 161, 162 and thus insulate the auxiliary winding 163 from the primary windings 161, 162.

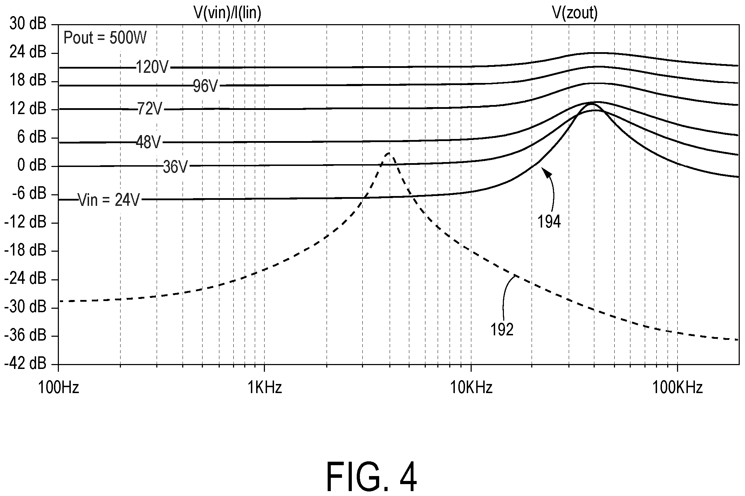

Fig. 4 is a graph of both (a) the input filter output impedance 192 and (b) the power conversion circuit input impedance 194 at the input voltages of 24V, 36V, 48V, 72V, 96V, and 120V. As is shown, the input filter output impedance 192 exceeds the power conversion circuit input impedance 194 between 3 kHz and 5 kHz, with a peak at about 4 kHz. If left un-damped, the input filter will oscillate resulting in a large ripple voltage at the input to the power conversion circuit.

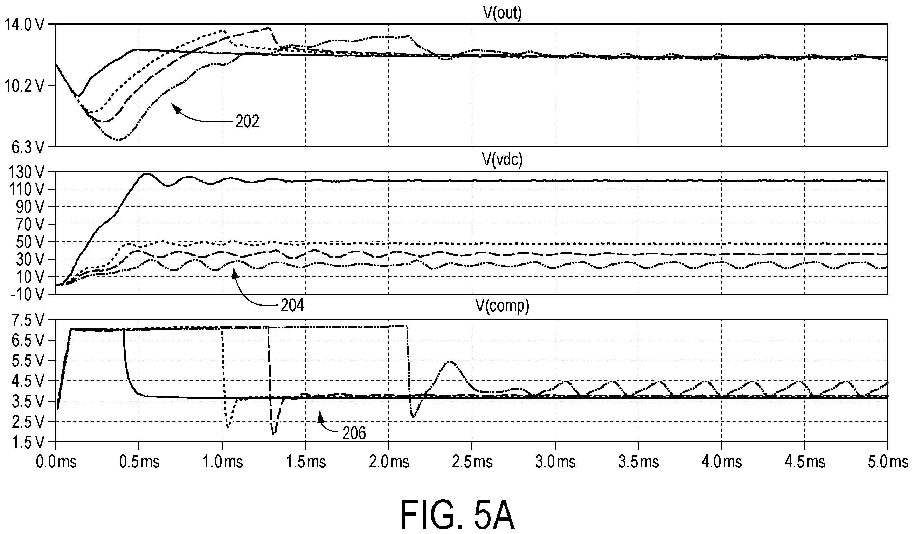

Fig. 5A is a graph of start-up voltages for an input filter when un-damped according to a simulation. The simulation uses an output power of 500 W. The inputs are 24 V, 36 V, 48 V and 120 V. The graphs show over time the output voltage 202, DC voltage 204, and compensation voltage 206. As can be seen from the simulations, at low input voltages the DC link capacitor oscillates and this is transferred through the converter and appears as unwanted ripple on the output.

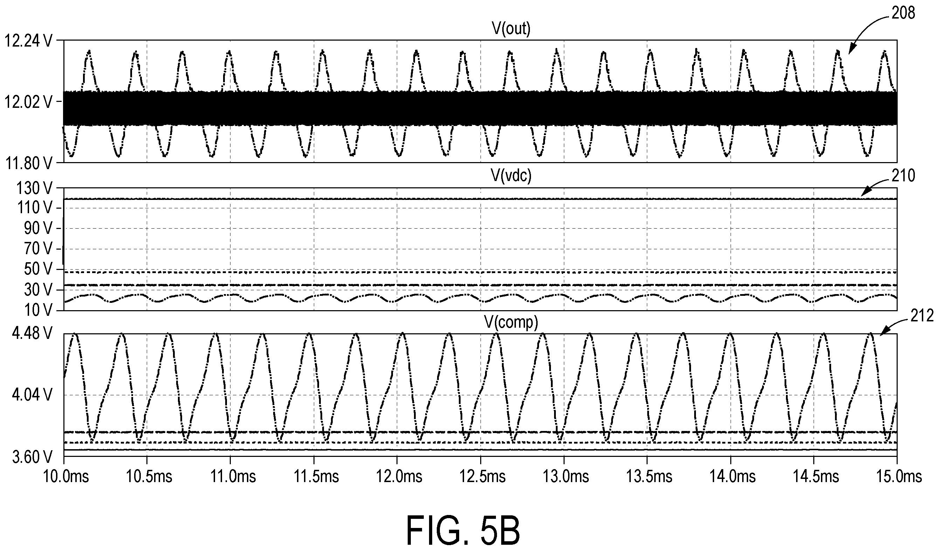

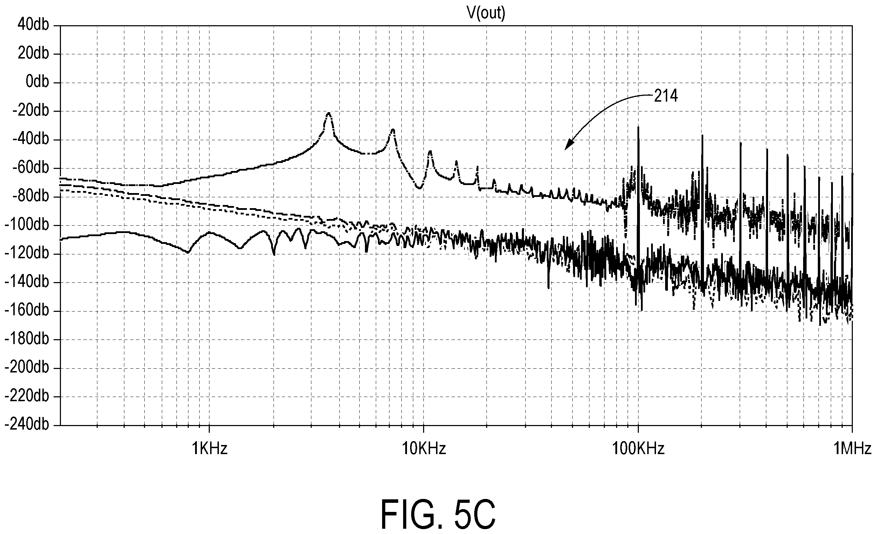

Fig. 5B is a graph of steady state voltages for an input filter when un-damped according to a simulation. The graphs show over time the output voltage 208, DC voltage 210, and compensation voltage 212. Fig. 5C is a graph of the Fast Fourier Transform (FFT) of the input filter output voltage 214 when un-damped according to a simulation.

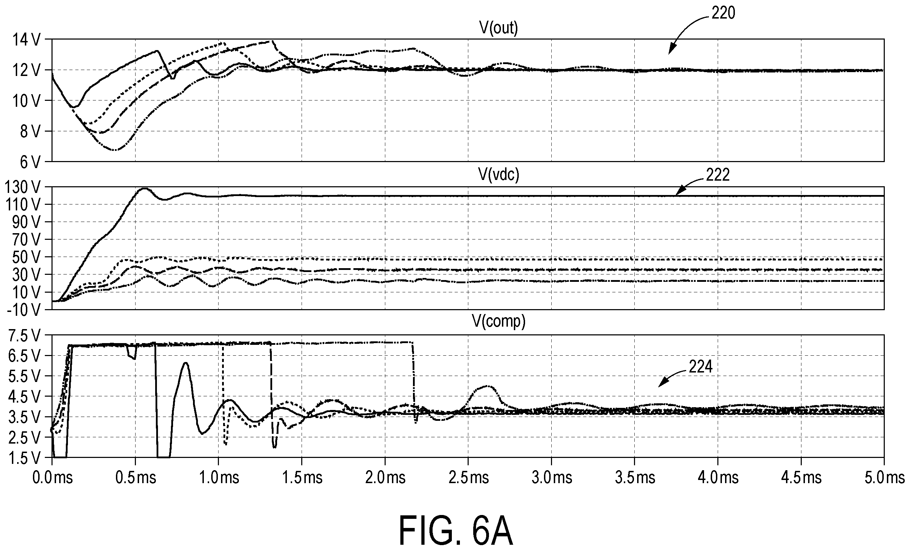

Fig. 6A is a graph of start-up voltages for an input filter when damped according to a simulation. Again, the simulation uses an output power of 500 W, and the inputs are 24 V, 36 V, 48 V and 120 V. The graphs show over time the output voltage 220, DC voltage 222, and compensation voltage 224. As can be seen from the simulations, with the input inductor voltage feedback used to create loop damper, the output voltage is now stable at all input voltages, unlike Fig. 5A where oscillation was present at low input voltages.

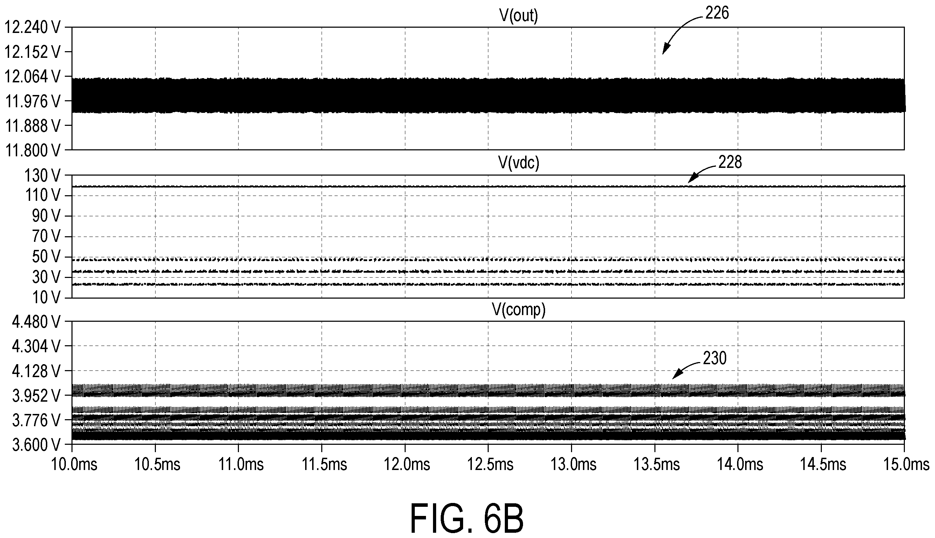

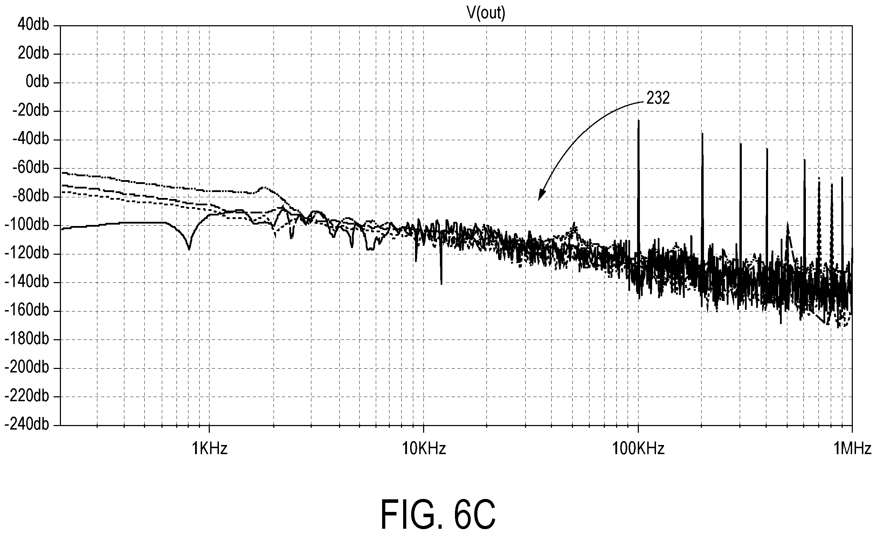

Figs. 6B and 6C are simulations similar to that of Figs. 5B and 5C, respectively, but where the input inductor voltage feedback is used to create loop damper. Similar to Fig. 5B, Fig. 6B shows the output voltage 226, DC voltage 228, and compensation voltage 230 over time. Similar to Fig. 5C, Fig. 6C is a graph of the Fast Fourier Transform (FFT) of the input filter output voltage 232. As can be seen in these figures, the output voltage has been stabilized.

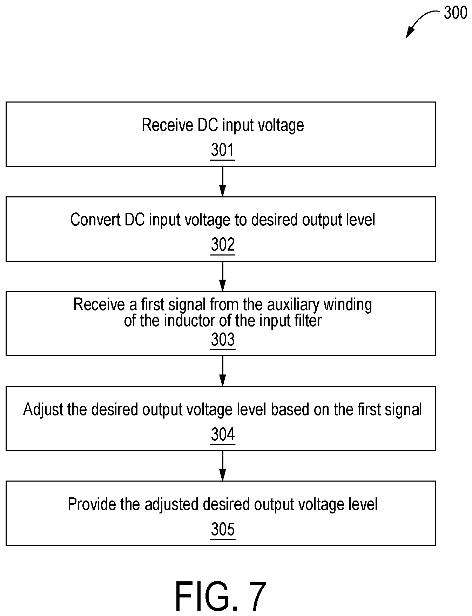

Fig. 7 is flow chart of a method 300 of stabilizing a DC-to-DC converter consistent with the system discussed above. In operation 301, a DC input voltage at an input terminal of a DC-to-DC converter is received, where the DC-to-DC converter may have the components discussed above. In operation 302, the power conversion circuit converts the DC input voltage to a desired output voltage level. In operation 303, the voltage control circuit receives a first signal from the auxiliary winding of the inductor of the input filter, the first signal being indicative of an output voltage of the input filter. In operation 304, the voltage control circuit causes an adjustment to the desired output voltage level based on the first signal. In operation 305, the output terminal provides the adjusted desired output voltage level.

The disclosed inventions provide several advantages. As discussed above, the use of the auxiliary winding of the inductor of the input filter enables the required signal to be transferred across the galvanic isolation barrier without compromising performance or adding cost or size to the converter.

While the inventions have been described with respect to specific examples including presently preferred modes of carrying out the inventions, those skilled in the art will appreciate that there are numerous variations and permutations of the above described systems and techniques. It is to be understood that other embodiments may be utilized and structural and functional modifications may be made without departing from the scope of the present inventions. Thus, the spirit and scope of the inventions should be construed broadly as set forth in the appended claims.

The present invention can also be described by means of the following clauses:
1. A DC-to-DC converter comprising:
   an input terminal configured to receive a direct current (DC) input voltage;
   an input filter coupled to the input terminal, the input filter comprising an inductor comprising:
      a core element;
      at least one primary winding wound around the core element and coupled to the input terminal; and
      an auxiliary winding wound around the core element and not coupled to the input terminal;
   a power conversion circuit coupled to the input filter and configured to convert the DC input voltage to a desired output voltage level and comprising a voltage control circuit, the voltage control circuit configured to:
      receive a first signal from the auxiliary winding of the inductor of the input filter, the first signal being indicative of an output voltage of the input filter; and
      adjust the desired output voltage level based on the first signal; and
   an output terminal coupled to the power conversion circuit and configured to provide the adjusted desired output voltage level.
2. The DC-to-DC converter of the preceding clause wherein the inductor is a differential mode inductor.
3. The DC-to-DC converter of any of the preceding clauses wherein the first signal is indicative of an AC component of the output voltage of the input filter.
4. The DC-to-DC converter of any of the preceding clauses wherein the at least one primary winding comprises a single primary winding, or two primary windings coupled in series.
5. The DC-to-DC converter of any of the preceding clauses wherein the voltage control circuit is further configured to receive signals from the output terminal indicative of the output voltage of the DC-to-DC converter.
6. The DC-to-DC converter of any of the preceding clauses wherein the power conversion circuit further comprises:
   a switching circuit and a switch controller configured to regulate the flow of current through the power conversion circuit;
   an energy storage element coupled to the switching circuit and configured to store and release energy during the operation of the power conversion circuit;
   a transformer having a primary winding and a secondary winding, the primary winding coupled to the switching circuit; and
   a rectifier coupled to the secondary winding of the transformer and configured to rectify the output voltage of the power conversion circuit to provide the desired output voltage level;
   wherein a switching operation of the switching circuit is based on a second signal from the voltage control circuit.
7. The DC-to-DC converter of clause 6 wherein the energy storage element is a capacitor, and wherein the capacitor also forms part of the input filter.
8. The DC-to-DC converter of any of clause 6 wherein the power conversion circuit further comprises an optocoupler or an opto-emulator coupled to the voltage control circuit and the switch controller.
9. The DC-to-DC converter of any of the preceding clauses further comprising an output filter coupled to the output terminal, the output filter comprising a capacitor.
10. A method of providing DC-to-DC power conversion, the method comprising:
   receiving a direct current (DC) input voltage at an input terminal of a DC-to-DC converter, the DC-to-DC converter comprising:
      the input terminal;
      an input filter coupled to the input terminal, the input filter comprising an inductor comprising:
         a core element;
         at least one primary winding wound around the core element and coupled to the input terminal; and
         an auxiliary winding wound around the core element and not coupled to the input terminal;
      a power conversion circuit coupled to the input filter and comprising a voltage control circuit; and
      an output terminal coupled to the power conversion circuit;
   the power conversion circuit converting the DC input voltage to a desired output voltage level;
   the voltage control circuit receiving a first signal from the auxiliary winding of the inductor of the input filter, the first signal being indicative of an output voltage of the input filter;
   the voltage control circuit causing an adjustment to the desired output voltage level based on the first signal; and
   the output terminal providing the adjusted desired output voltage level.
11. The method of clause 10 wherein the inductor is a differential mode inductor.
12. The method of any of clauses 10-11 wherein the first signal is indicative of an AC component of the output voltage of the input filter.
13. The method of any of clauses 10-12 wherein the at least one primary winding comprises a single primary winding, or two primary windings coupled in series.
14. The method of any of clauses 10-13 further comprising the voltage control circuit receiving signals from the output terminal indicative of the output voltage of the DC-to-DC converter.
15. The method of any of clauses 10-14 wherein the power conversion circuit further comprises:
   a switching circuit and a switch controller configured to regulate the flow of current through the power conversion circuit;
   an energy storage element coupled to the switching circuit and configured to store and release energy during the operation of the power conversion circuit;
   a transformer having a primary winding and a secondary winding, the primary winding coupled to the switching circuit; and
   a rectifier coupled to the secondary winding of the transformer and configured to rectify the output voltage of the power conversion circuit to provide the desired output voltage level;
   wherein a switching operation of the switching circuit is based on a second signal from the voltage control circuit.
16. The method of clause 15 wherein the energy storage element is a capacitor, and wherein the capacitor also forms part of the input filter.
17. The method of any of clause 15 wherein the power conversion circuit further comprises an optocoupler or an opto-emulator coupled to the voltage control circuit and the switch controller.
18. The method of any of the preceding clauses further comprising an output filter coupled to the output terminal, the output filter comprising a capacitor.

## Claims

1. A DC-to-DC converter comprising:
an input terminal configured to receive a direct current (DC) input voltage;
an input filter coupled to the input terminal, the input filter comprising an inductor comprising:
a core element;
at least one primary winding wound around the core element and coupled to the input terminal; and
an auxiliary winding wound around the core element and not coupled to the input terminal;
a power conversion circuit coupled to the input filter and configured to convert the DC input voltage to a desired output voltage level and comprising a voltage control circuit, the voltage control circuit configured to:
receive a first signal from the auxiliary winding of the inductor of the input filter, the first signal being indicative of an output voltage of the input filter; and
adjust the desired output voltage level based on the first signal; and
an output terminal coupled to the power conversion circuit and configured to provide the adjusted desired output voltage level.

2. The DC-to-DC converter of any of the preceding claims wherein
- the inductor is a differential mode inductor, and/or
- the first signal is indicative of an AC component of the output voltage of the input filter.

3. The DC-to-DC converter of any of the preceding claims wherein the at least one primary winding comprises a single primary winding, or two primary windings coupled in series.

4. The DC-to-DC converter of any of the preceding claims wherein the voltage control circuit is further configured to receive signals from the output terminal indicative of the output voltage of the DC-to-DC converter.

5. The DC-to-DC converter of any of the preceding claims wherein the power conversion circuit further comprises:
a switching circuit and a switch controller configured to regulate the flow of current through the power conversion circuit;
an energy storage element coupled to the switching circuit and configured to store and release energy during the operation of the power conversion circuit;
a transformer having a primary winding and a secondary winding, the primary winding coupled to the switching circuit; and
a rectifier coupled to the secondary winding of the transformer and configured to rectify the output voltage of the power conversion circuit to provide the desired output voltage level;
wherein a switching operation of the switching circuit is based on a second signal from the voltage control circuit.

6. The DC-to-DC converter of claim 5 wherein
- the energy storage element is a capacitor, and wherein the capacitor also forms part of the input filter, and/or
- the power conversion circuit further comprises an optocoupler or an opto-emulator coupled to the voltage control circuit and the switch controller.

7. The DC-to-DC converter of any of the preceding claims further comprising an output filter coupled to the output terminal, the output filter comprising a capacitor.

8. A method of providing DC-to-DC power conversion, the method comprising:
receiving a direct current (DC) input voltage at an input terminal of a DC-to-DC converter, the DC-to-DC converter comprising:
the input terminal;
an input filter coupled to the input terminal, the input filter comprising an inductor comprising:
a core element;
at least one primary winding wound around the core element and coupled to the input terminal; and
an auxiliary winding wound around the core element and not coupled to the input terminal;
a power conversion circuit coupled to the input filter and comprising a voltage control circuit; and
an output terminal coupled to the power conversion circuit;
the power conversion circuit converting the DC input voltage to a desired output voltage level;
the voltage control circuit receiving a first signal from the auxiliary winding of the inductor of the input filter, the first signal being indicative of an output voltage of the input filter;
the voltage control circuit causing an adjustment to the desired output voltage level based on the first signal; and
the output terminal providing the adjusted desired output voltage level.

9. The method of claim 8 wherein
- the inductor is a differential mode inductor, and/or
- the first signal is indicative of an AC component of the output voltage of the input filter.

10. The method of any of claims 8 or 9 wherein the at least one primary winding comprises a single primary winding, or two primary windings coupled in series.

11. The method of any of claims 8-10 further comprising the voltage control circuit receiving signals from the output terminal indicative of the output voltage of the DC-to-DC converter.

12. The method of any of claims 8-11 wherein the power conversion circuit further comprises:
a switching circuit and a switch controller configured to regulate the flow of current through the power conversion circuit;
an energy storage element coupled to the switching circuit and configured to store and release energy during the operation of the power conversion circuit;
a transformer having a primary winding and a secondary winding, the primary winding coupled to the switching circuit; and
a rectifier coupled to the secondary winding of the transformer and configured to rectify the output voltage of the power conversion circuit to provide the desired output voltage level;
wherein a switching operation of the switching circuit is based on a second signal from the voltage control circuit.

13. The method of claim 12 wherein the energy storage element is a capacitor, and wherein the capacitor also forms part of the input filter.

14. The method of claim 12 wherein the power conversion circuit further comprises an optocoupler or an opto-emulator coupled to the voltage control circuit and the switch controller.

15. The method of any of the preceding claims 8-14 further comprising an output filter coupled to the output terminal, the output filter comprising a capacitor.
